# EUROPÄISCHE PATENTSCHRIFT

(11) **EP 2 424 705 B1**
(45) Veröffentlichungstag und Bekanntmachung des Hinweises auf die Patenterteilung: **16.03.2016**
(21) Anmeldenummer: 10782559.8
(22) Anmeldetag: 25.11.2010
(51) Int. Cl.: B23K 11/30, B23Q 3/155

(54) **MAGAZIN FÜR ELEKTRODENKAPPEN**
MAGAZINE FOR ELECTRODE CAPS
MAGASIN POUR CAPUCHONS D'ÉLECTRODE

(30) Priorität: 17.12.2009 DE 102009058937
(43) Veröffentlichungstag der Anmeldung: 07.03.2012
(73) Patentinhaber: Bräuer Systemtechnik GmbH, 09456 Mildenau (DE)
(72) Erfinder: BRÄUER, Andreas, 09456 Annaberg-Buchholz (DE)
(74) Vertreter: Köhler, Tobias
(86) Internationale Anmeldenummer: PCT/EP2010/007144
(87) Internationale Veröffentlichungsnummer: WO 2011/082734

(56) Entgegenhaltungen:
- EP-A1- 2 085 172
- DE-A1- 19 905 477
- JP-A- 2006 068 787

## Beschreibung

Die Erfindung betrifft ein Magazin für Elektrodenkappen von Schweißelektroden, insbesondere für Schweißzangen von Schweißrobotern.

Insbesondere in der Automobilindustrie wird zum Verbinden von Metallblechen und Bändern häufig das Punkt-Schweißen in der Karosserieherstellung in automatisierten Fertigungsstrassen eingesetzt.

Üblicherweise werden hier Schweißrobotern eingesetzt, um die Karosserieblechteile durch Punkt-Schweißen miteinander zu verbinden.
Diese Schweißroboter sind mit Schweißzangen ausgestattet, deren Zangenbacken mit je einer Punkt-Schweiß-Elektrode, den sogenannten Elektrodenkappen, ausgerüstet sind.

Diese Schweißzangen werden an die miteinander zu verschweißenden positionierten Blechen herangeführt. Die genaue Positionierung der Schweißzange zu den zu verschweißenden Blechen sowie die Anordnung der Bleche zueinander erfolgt automatisiert und computergestützt.
In solch einer automatisierten Fertigungsstraße erfolgen die Schweißvorgänge in möglichst schneller Taktung und unterbrechungsfrei.

Hierdurch unterliegen insbesondere die Elektrodenkappen einem hohen Verschleiß, da die Kontaktflächen der Elektrodenkappen in Eingriff mit den jeweils zu verschweißenden Karosserieblechteilen treten.

Bei diesem Schweißvorgang fließt Strom zwischen den Elektroden durch die zu verscheißenden und aneinander anliegenden Karosserieblechteile.

Dabei tritt eine Veränderung an den Kontaktflächen der Elektrodenkappen an deren Schweißbereichen auf.
Häufig bilden sich am Rand der Kontaktflächen Abbrandwülste, welche durch eine Vergrößerung der Kontaktfläche eine Veränderung der Schweißbedingungen bewirken.

Um dieser Veränderung nicht durch ein unökonomisches Nachführen der Stromstärke begegnen zu müssen, werden die Elektrodenkappen regelmäßig und in Abhängigkeit ihrer Belastung und daraus resultierender Abnutzung durch Fräsen nachbearbeitet.

Häufig werden zusammenwirkende Elektroden einer Schweißzange in gleichem oder ähnlichem Maße verschleißen, so dass diese regelmäßig und gleichzeitig durch Fräsen nachbearbeitet werden müssen.

Nach einer Anzahl durchgeführter Nachbearbeitungen ist ein Materialabtrag von der Elektrodenkappe in solch einem Maße erfolgt, dass diese ausgetauscht werden müssen.
Dazu werden die verschlissenen Elektrodenkappen von den Schweißelektrodenschäften abgezogen.

Zum Bestücken der Schweißelektrodenschäfte mit neuen unverbrauchten Elektrodenkappen werden üblicherweise Magazine in einfacher Ausführungsform verwendet. Diese Magazine sind so angeordnet, dass die Schweißzangen durch Schließen in einer definierten Position neue Elektrodenkappen aufnehmen und diese in ihrer Lage auf dem Schweißelektrodenschaft durch Andrücken der Schweißzangenschenkel gegeneinander definieren. Da die Magazine in einer definierten Lage angeordnet sein müssen, um von der Schweißzange angefahren werden zu können, ist es erforderlich, diese Magazine in ihrer Positionierung zu belassen und die Magazine am Einsatzort von Hand nachzufüllen.

Dies erfordert jedoch in der Regel eine Prozessunterbrechung, das es aus sicherheitstechnischen Bedingungen nicht möglich ist, im laufenden Betrieb dieses Nachfüllen vorzunehmen, da sich Personen nicht in den Aktionsbereichen der aktiven Roboter bewegen dürfen.

Um diesem Nachteil zu begegnen, wurden auch Wechsel der Magazine vorgenommen.

So beschreibt die DE 199 05 477 ein Magazin für Elektrodenkappen von Schweißelektroden, insbesondere für Schweißzangen vom Schweißrobotern. Diese Lösung schlägt vor, die zu bevorratenden Elektrodenkappen in einem Magazin in einer Reihe in ihrem Profil der Form der Elektrodenkappen entsprechenden Kappenführungen zu lagern, welche parallel zur Längsachse des Magazins und lageidentisch dazu auch in der Entnahmeöffnung ausgeführt sind.

Dabei ist die Entnahmeöffnung soweit in Zugriffrichtung der Schweißzange geöffnet, dass jeweils eine Schweißkappe mit ihrer in Richtung des Zugriffs positionierten Öffnung angeordnet ist und in ihrem gesamten Zugriff frei liegt.

Hier wird jedoch der Nachteil der Prozessunterbrechung nicht behoben, da nach Montage eines neuen Magazins ebenfalls eine neue Programmierung der Koordinaten der Schweißzangenbewegung erfolgen muss.

Der Erfindung liegt die Aufgabe zugrunde, ein Magazin für Elektrodenkappen vorzuschlagen, mit welchem die Schwierigkeiten bisher bekannter Lösungen möglichst vermieden werden und insbesondere zu erreichen, dass die Prozesssicherheit gewährleistet wird.

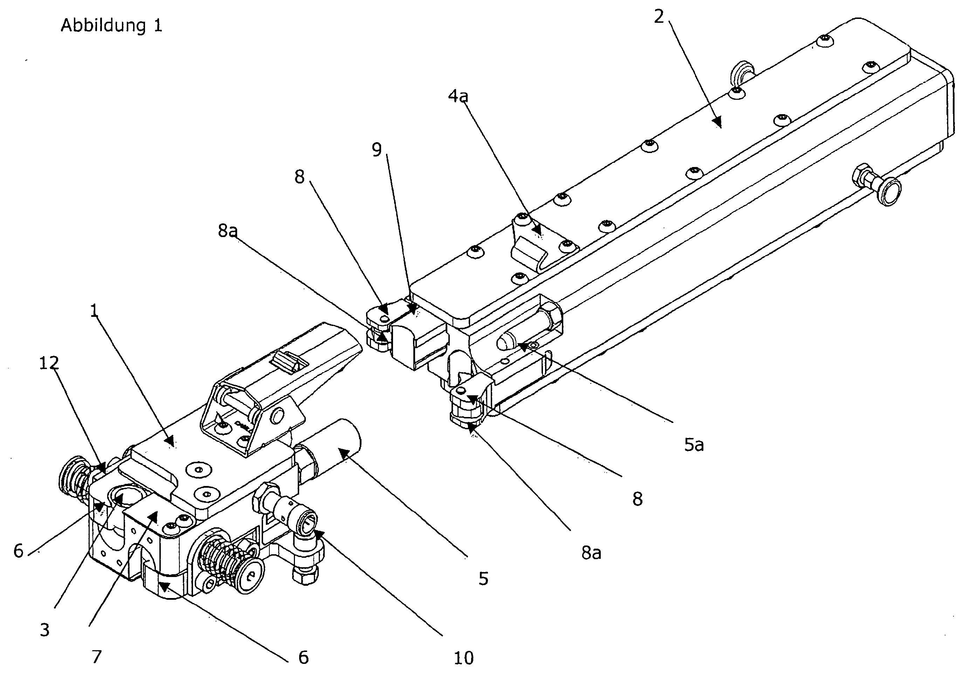

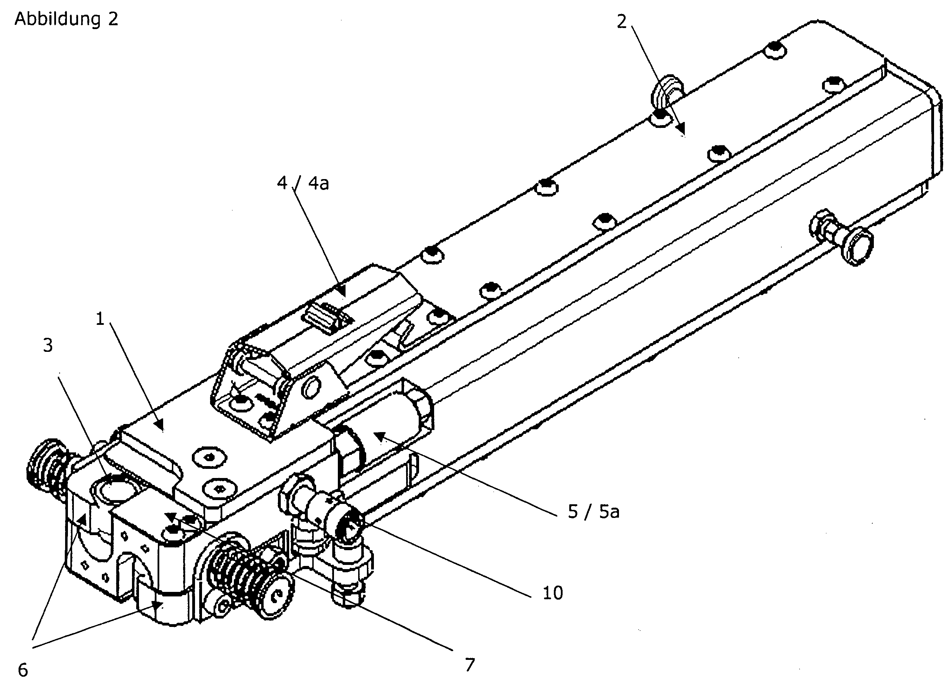

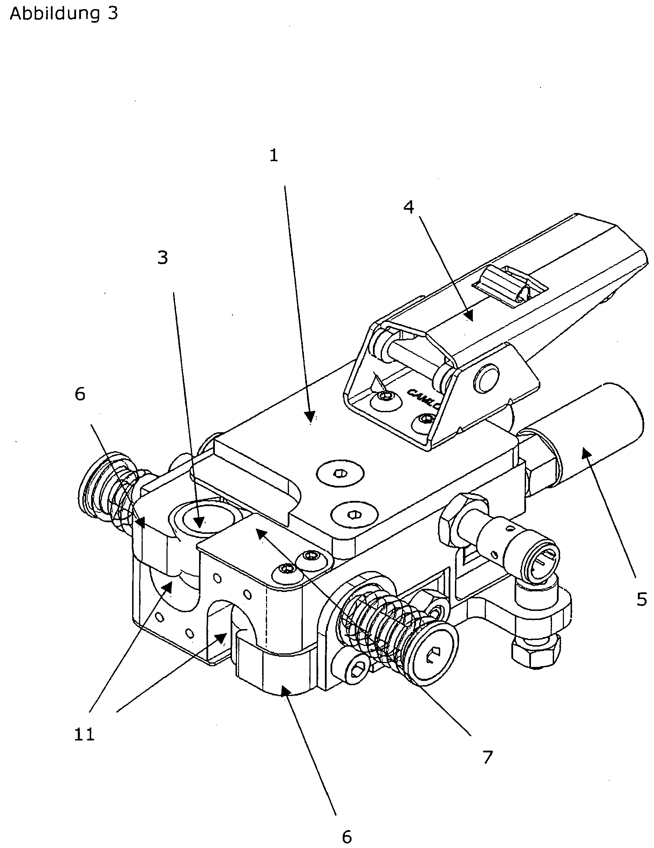

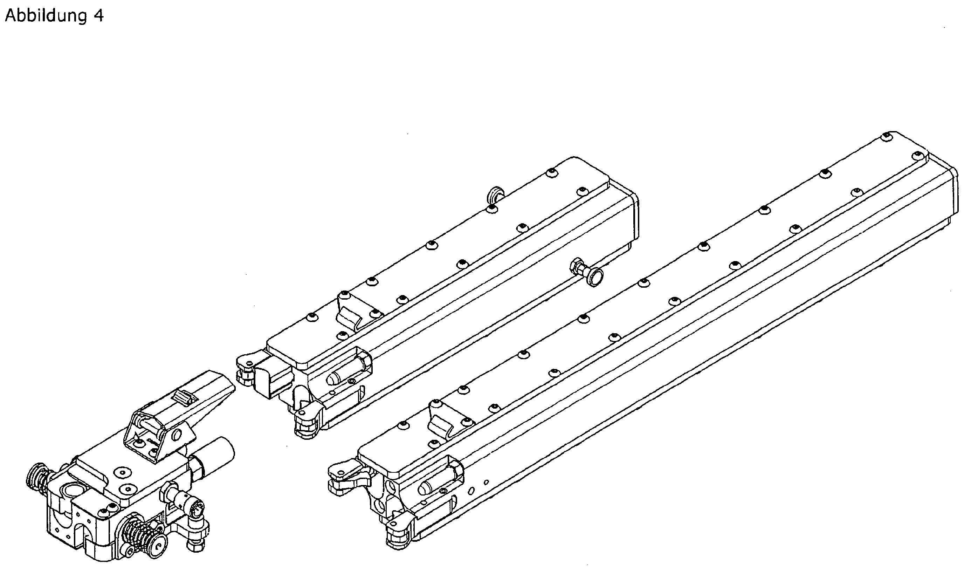

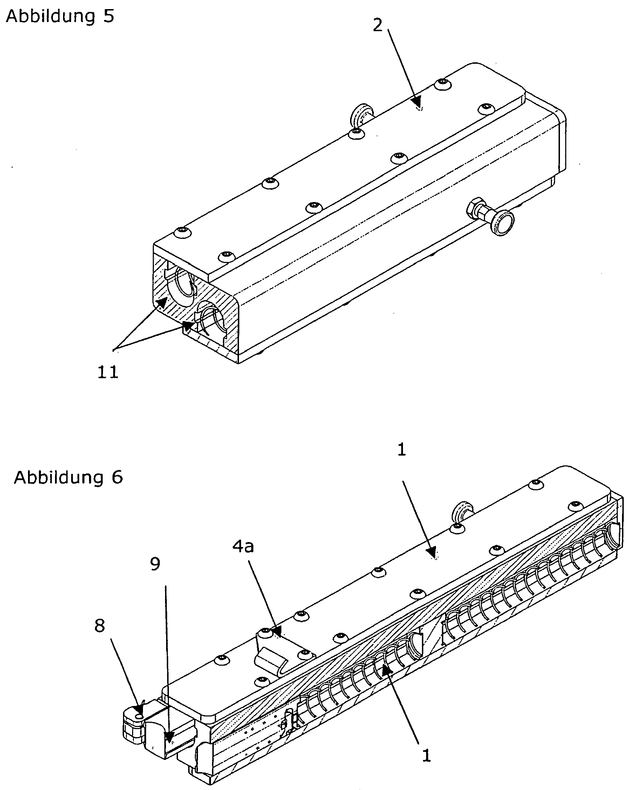

Erfindungsgemäß wird diese Aufgabe durch eine Vorrichtung gemäß der Patentansprüche 1 bis 7 gelöst, nachfolgend soll dieses System anhand der Abbildung 1 bis 6 und dem nachfolgenden Ausführungsbeispiel näher erläutert werden.
Dabei zeigt Abbildung 1 das erfindungsgemäße Magazin in entkoppeltem Zustand, Abbildung 2 zeigt das erfindungsgemäße Magazin in gekoppeltem Zustand, Abbildung 3 zeigt den Magazinkopf 1, Abbildung 4 zeigt das Wechselmagazin in verschiedenen Größen, die Abbildungen 5 und 6 zeigen das Wechselmagazin im Quer- und im Längsschnitt.

Das erfindungsgemäße Magazin besteht aus einem Magazinkopf 1 und einem Wechselmagazin 2.
Zur Verbindung des Wechselmagazins 2 mit dem Magazinkopf 1 ist eine Schnellspanneinrichtung 4 und 4a so angeordnet, dass am Magazinkopf 1 der Spanner 4 und am Wechselmagazin 2 der Spannhaken 4a angeordnet sind. Diese Anordnung ist technisch sinnvoll, da in Kraftrichtung des zu betätigenden Spanners 4 das Wechselmagazin 2 zum Magazinkopf 1 und somit in Richtung seiner Funktionslage hin kraftbelastet wird.

Zur Gewährleistung einer definierten Lage des Magazinkopfes 1 und dem Wechselmagazin 2 bei Verbindung dieser beiden Baugruppen ist mindestens eine Führungseinrichtung angeordnet. In diesem Ausführungsbeispiel ist diese dergestalt ausgeführt, dass mindestens ein Führungsdorn 5a in eine Führungshülse 5 eingreift.
Die beiden Führungselemente Führungshülse 5 und Führungsdorn 5a sind hinsichtlich ihrer Form und ihrer maßlichen Toleranzen vorzugsweise so gestaltet, dass sie sich leicht in Eingriff bringen lassen und dennoch eine definierte Lage des Magazinkopfes 1 und des Wechselmagazins 2 zueinander gewährleistet ist.

Die zu bevorratenden Elektrodenkappen sind in dem Wechselmagazin 2 in zwei Kappenführungen 11 angeordnet, welche parallel zur Längsachse des Wechselmagazins 2 und lageidentisch dazu auch im Magazinkopf 1 ausgeführt sind. Dabei sind die Kappenführungen 11 diagonal versetzt in Wechselmagazin 2 und Magazinkopf 1 so eingebracht, dass die Elektrodenkappen sich mit ihren Kontaktflächen zueinander diagonal gegenüberstehen.

Durch diese Anordnung der Elektrodenkappen 3 in Wechselmagazin 2 und Magazinkopf 1 mit der Öffnung der Elektrodenkappen 3 nach außen ist es möglich, dass die Schweißzange zur Aufnahme der Elektrodenkappen 3 mit ihren Elektrodenschäften in die Elektrodenkappen 3 eingreifen kann. Die diagonal im Querschnitt von Wechselmagazin 2 und Magazinkopf 1 versetzt Anordnung der Kappenführungen 11 wurde gewählt, um eine möglichst geringe Baugröße der Einheit zu realisieren, da die Bauhöhe der Einrichtung somit geringer ist als die Höhe zweier sich gegenüberliegender Kappen zuzüglich der Wanddicke der Trennwand beider Kappenführung.

Die Kappenführungen 11 sind in ihrem Querschnitt so ausgeführt, dass die Elektrodenkappen 3 mit geringer Kraft zu befördern sind und sich in den Kappenführungen 11 und insbesondere an der Verbindungsstelle zwischen Wechselmagazin 2 und Magazinkopf 1 ein Verkanten der Kappen 3 verhindert wird. Dies wird dadurch erreicht, dass die Kappenführungen 11 in Form der Elektrodenkappen 3 zuzüglich entsprechender Toleranzen ausgeführt sind.

Dies bedingt auch, dass entsprechend der Form der Elektrodenkappen 3 auch jeweils die Kappenführungen 11 in Wechselmagazin 2 und Magazinkopf 1 zueinander passend sind. Vorzugsweise werden der Magazinkopf 1und das Wechselmagazin 2 aus einem Profil gebildet, in welches die Kappenführung 11 eingearbeitet ist. Zur Herstellung verschiedener Magazinlängen wird dieses Profil auf entsprechend erforderliche Magazinlänge zugeschnitten.
Zum Schließen der Kappenführungen 11 des Magazinkopfes 1 und des Wechselmagazins 2 werden Verschlussblenden, welche vorzugsweise Blechteile sein können, über den Kappenführungen angebracht. Das Verschließen der dem Magazinverschluss 8 und 8a gegenüberliegenden Seite des Wechselmagazins 2 geschieht vorzugsweise mit gleichen Mitteln.
An der dem Magazinkopf 1 zugewandten Seite des Wechselmagazins 2 ist ein Magazinverschluss 8 angeordnet. Dieser Magazinverschluss 8 verhindert, dass Elektrodenkappen 3, welche ;m Wechselmagazin mit einer Kraft, welche sie in Richtung des Magazinkopfes befördert, beaufschlagt werden, aus dem nicht aufgesteckten Wechselmagazin herausgeschoben werden.

Gemäß des Ausführungsbeispiels ist dieser Magazinverschluss 8 so ausgeführt, dass die Elektrodenkappen 3, welche im Wechselmagazin 2 bevorratet sind und durch den vorzugsweise mit Federkraft beaufschlagten Kappenförderer 9 in Richtung des Magazinkopfes 1 geschoben werden, durch Rasthebel 8a im Wechselmagazin 2 zurückgehalten werden.

Dabei werden die Rasthebel 8a mittels vorzugsweise Federn so positioniert, dass die Austrittsöffnung der Kappenführung 11 so verkleinert wird, dass ein Austreten der Elektrodenkappen 3 nicht möglich ist.
Wird das Wechselmagazin 2 auf den Magazinkopf 1 aufgesetzt, werden die Rasthebel 8a des Magazinverschlusses 8 durch am Magazinkopf 1 angeordnete, gegen die Federkraft der Rasthebel 8a wirkende Führungen so positioniert, dass die dem Magazinkopf 1 zugewandte Öffnung der Kappenführung 11 freigegeben wird und die Elektrodenkappen 3 in die Kappenführung 11 des Magazinkopfes übergeben werden.

An der dem Wechselmagazin 2 abgewandten Seite des Magazinkopfes 1 werden die Elektrodenkappen 3 den Elektrodenschäften der Schweißzangen übergeben.
Hierzu sind die Kappenführungen 11 in Zugriffrichtung der Schweißzangen soweit geöffnet, dass jeweils eine Elektrodenkappe 3 mit ihrer in Richtung des Zugriffs positionierten Öffnung angeordnet in ihrem gesamten Durchmesser freiliegt.
Zum Fixieren der Elektrodenkappen 3 in dieser Position ist für jede Kappenführung mindestens eine Klemmbacke 6 angeordnet.

Diese gemäß dieses Ausführungsbeispiels mit Federkraft beaufschlagten Klemmbacken 6 fixieren die Elektrodenkappen 3 bis zum Eingriff des Elektrodenschaftes.
Ist der Elektrodenschaft durch Schließen der Schweißzange in der richtigen Position in die Elektrodenkappe 3 eingeführt, wird die Elektrodenkappe 3 in Richtung des Verlaufes der Kappenführung 11 vom Magazinkopf 1 aus der Kappenführung 11 gezogen. Dabei wird die die Klemmbacke 6 beaufschlagende Federkraft überwunden und die Elektrodenkappe 3 frei gegeben.

Vorzugsweise ist neben der Übergabeöffnung 12 im Magazinkopf 1 auf dessen Gehäuse eine Andrückplatte 7 angeordnet. Diese Andrückplatte 7 wirkt als Widerlager für den zweiten, noch nicht mit einer neuen Kappe 3 bestückten Schenkel der Scheißzange und drückt die übernommene Elektrodenkappe 3 mit der vorgegebenen Kraft auf den Elektrodenschaft.

Übernimmt eine Schweißzange eine Elektrodenkappe 3 aus einem Magazinkopf 1 beispielsweise der Darstellung der Zeichnungen entsprechend in einem ersten Schritt von oben, so wirkt die unten liegende Andrückplatte 7 beim Schließen der Schweißzange als Widerlager für den noch freien Elektrodenschaft, in einem weiteren Schritt wird die Elektrodenkappe für den zweiten unteren, noch unbestückten Elektrodenschaft übernommen und beim Schließen der Schweißzange wirkt nunmehr die obere Andrückplatte 7 als Widerlager.

Zur Überwachung des Füllgrades des Magazins ist es sinnvoll, diese Einrichtung mit entsprechenden Kontrolleinrichtungen auszustatten. Vorgeschlagen wird eine Überwachung mittels eines Näherungssensors, welcher am vorgesehenen Anschluss 10 anzuordnen ist.
Beispielsweise ist es so möglich, bei einer ersten fehlenden Kappe 3 am Sensor ein entprechendes Signal zum Wechsel des Magazins 2 an den Bediener zu leiten. Somit ist dieser in der Lage, den Wechsel des Magazins 2 vorzubereiten, während noch einige Elektrodenkappen in dem Magazinkopf 1 befindlich sind.

## Patentansprüche

1. Magazin für Elektrodenkappen von Schweißelektroden, insbesondere für Schweißzangen von Schweißrobotern, bestehend aus einem Magazinkopf (1) und einem mit diesem Magazinkopf (1) zu verbindenden Wechselmagazin (2), wobei zur Verbindung des Wechselmagazins (2) mit dem Magazinkopf (1) eine Schnellspanneinrichtung (4 und 4a) angeordnet ist und am Magazinkopf (1) und an dem Wechselmagazin (2) mindestens eine ineinandergreifende Führungseinrichtung (5 und 5a) angeordnet ist und die zu bevorratenden Elektrodenkappen (3) in dem Wechselmagazin (2) in zwei in ihrem Profil der Form der Elektrodenkappen (3) entsprechenden Kappenführungen (11 gelagert sind, welche parallel zur Längsachse des Wechselmagazins (2) und lageidentisch dazu auch im Magazinkopf (1) ausgeführt sind, wobei diese Kappenführungen (11) diagonal versetzt in Wechselmagazin (2) und Magazinkopf (1) so eingebracht sind, dass die Elektrodenkappen (3) sich mit ihren Kontaktflächen zueinander diagonal gegenüberstehen und an der dem Magazinkopf (1) zugewandten Seite des Wechselmagazins (2) ein Magazinverschluss (8) angeordnet ist und dass der Magazinkopf (1) an seiner dem Wechselmagazin (2) abgewandten Seite soweit in Zugriffrichtung der Schweißzange in Form einer Öffnung (12) geöffnet ist, dass jeweils eine Elektrodenkappe (3) mit ihrer in Richtung des Zugriffs positionierten Öffnung angeordnet in ihrem gesamten Durchmesser freiliegt und zum Fixieren der Elektrodenkappen (3) in dieser Position für jede Kappenführung mindestens eine Klemmbacke (6) angeordnet ist und neben jeder Übergabeöffnung (12) im Magazinkopf (1) auf dessen Gehäuse jeweils eine Andrückplatte (7) gegenüber der jeweils anderen Öffnung (12) angeordnet ist.

2. Magazin nach Anspruch 1, **dadurch gekennzeichnet, dass** die Führungseinrichtung (5 und 5a) aus einer Führungshülse (5) und einem in die Führungshülse (5) eingreifenden Führungsdorn (5a) besteht.

3. Magazin nach Anspruch 2, **dadurch gekennzeichnet, dass** die Führungshülse (5) und Führungsdorn (5a) so gestaltet sind, dass sie sich leicht in Eingriff bringen lassen und dennoch eine definierte Lage des Magazinkopfes (1) und des Wechselmagazins (2) zueinander gewährleistet ist.

4. Magazin nach Anspruch 1, **dadurch gekennzeichnet, dass** der Magazinverschluss (8) so ausgeführt ist, dass die Elektrodenkappen (3), welche im Wechselmagazin (2) bevorratet sind und durch den vorzugsweise mit Federkraft beaufschlagten Kappenförderer (9) in Richtung des Magazinkopfes 1 geschoben werden, durch Rasthebel (8a) im Wechselmagazin (2) zurückgehalten werden.

5. Magazin nach Anspruch 4, **dadurch gekennzeichnet, dass** die Rasthebel (8a) federkraftbeaufschlagt sind und die Austrittsöffnung der Kappenführung (11) so verkleinert ist, dass ein Austreten der Elektrodenkappen (3) verhindert ist.

6. Magazin nach Anspruch 1, **dadurch gekennzeichnet, dass** die Kappenführungen (11) im Wechselmagazin (2) und im Magazinkopf (1) in ihrem Querschnitt so der Form der verwendeten Elektrodenkappen (3) angepasst sind, dass die Elektrodenkappen (3) mit geringer Kraft zu befördern sind und sich in den Kappenführungen (11) und insbesondere an der Verbindungsstelle zwischen Wechselmagazin (2) und Magazinkopf (1) ein Verkanten der Kappen (3) verhindert wird.

7. Magazin nach Anspruch 1, **dadurch gekennzeichnet, dass** zur Überwachung des Füllgrades des Wechselmagazins 2 mindestens ein Sensor angeordnet ist.

## Claims

1. Magazine for electrode caps of welding electrodes, in particular for welding tongs of welding robots, **characterised in that** it consists of a magazine head (1) and a changer magazine (2) to be connected to said magazine head (1), wherein a quick-action coupling unit (4 and 4a) is provided in order to connect the changer magazine (2) to the magazine head (1), and at least one interlocking guide device (5 and 5a) is arranged on the magazine head (1) and on the changer magazine (2), the electrode caps (3) to be kept available for supply being stored in the changer magazine (2) in two cap guides (11), said guides having a profile that corresponds to the shape of the electrode caps (3) and which are designed parallel to the longitudinal axis of the changer magazine (2) and in identical positions in relation thereto in the magazine head (1), the cap guides (11) being introduced diagonally offset in the changer magazine (2) and magazine head (1) such that the contact surfaces of the electrode caps (3) are diagonally opposed to each other, and a magazine closure mechanism (8) being arranged on the side of the changer magazine (2) facing the magazine head (1), and the side of the magazine head (1) facing away from the changer magazine (2) being opened in the form of an aperture (12) sufficiently far in the access direction of the welding tongs so as to expose the full diameter of the aperture of one electrode cap (3) each positioned in the access direction, and in order to fix the electrode cap (3) in said position, at least one clamping jaw (6) being arranged for each cap guide, and a pressure plate (7) being arranged adjacent to each transfer aperture (12) in the magazine head (1) on the housing of the magazine head and opposite of the respective other aperture (12).

2. Magazine in accordance with Claim 1, **characterised in that** the guide device (5 and 5a) consists of a guide bush (5) and a guide mandrel (5a) engaging into the guide bush (5).

3. Magazine in accordance with Claim 2, **characterised in that** the guide bush (5) and guide mandrel (5a) are designed such that they can easily be engaged, but the defined position of the magazine head (1) and changer magazine (2) in relation to one another is nevertheless maintained.

4. Magazine in accordance with Claim 1, **characterised in that** the magazine lock (8) is designed such that the electrode caps (3) which are kept available for supply in the changer magazine (2) and pushed towards the magazine head (1) by a preferably spring-loaded cap feeder (9), are retained in the changer magazine (2) by the locking lever (8a).

5. Magazine in accordance with Claim 4, **characterised in that** the locking levers (8a) are spring-loaded and the exit aperture of the cap guide (11) is reduced to such an extent that the electrode caps (3) cannot come out.

6. Magazine in accordance with Claim 1, **characterised in that** the cap guides (11) in the changer magazine (2) and in the magazine head (1) have a cross-section which is adapted to the shape of the electrode caps (3) used in the process such that little force is required to transfer the electrode caps (3) and their jamming is prevented in the cap guides (11) and especially at the connecting point between the changer magazine (2) and the magazine head (1).

7. Magazine in accordance with Claim 1, **characterised in that** at least one sensor is provided in order to monitor the filling level of the changer magazine (2).

## Revendications

1. Magasin pour capuchons d'électrodes de soudage, notamment pour les pinces de soudage des robots de soudage, composé d'une tête de magasin (1) et d'un magasin amovible (2) à connecter avec cette tête de magasin (1), un disposition de serrage rapide (4, 4a) étant disposé pour la connexion du magasin amovible (2) à la tête de magasin (1), et au moins un dispositif de guidage interagissant (5, 5a) étant disposé sur la tête du magasin (1) et sur le magasin amovible (2), et les capuchons d'électrode (3) devant être en stock étant stockés dans le magasin amovible (2) dans deux guidages de capuchon (11) correspondant dans leur profil à la forme des capuchons d'électrode (3) qui sont exécutés de manière parallèle à l'axe en longueur du magasin amovible (2) et de position identique dans la tête du magasin (1), ces guidages de capuchon (11) étant placés de manière décalée en diagonale dans le magasin amovible (2) et la tête de magasin (1) de sorte à ce que les capuchons d'électrode (3) se fassent face en diagonale, l'un à l'autre, avec leurs surfaces de contact, et une fermeture de magasin (8) étant disposée sur le côté du magasin amovible (2) orienté vers la tête du magasin (1) et la tête de magasin (1) étant ouverte sur son côté éloigné du magasin amovible (2) dans le sens d'accès de la pince de soudage sous forme d'une ouverture (12) de sorte à ce que l'ouverture soit limitée et qu'un capuchon d'électrode (3) disposé avec son ouverture positionnée dans le sens de l'accès soit libre dans tout son diamètre et que pour fixer les capuchons d'électrode (3) dans cette position, pour chaque guide de capuchon, au moins une joue de serrage (6) soit disposée et à côté de chaque ouverture de transmission (12) dans la tête du magasin (1), sur le carter, une plaque de pression (7) soit placée en face de l'autre ouverture (12).

2. Magasin selon la revendication 1, **caractérisé en ce que** le dispositif de guidage (5, 5a) soit composé d'une douille de guidage (5) et d'un mandrin de guidage (5a) intervenant dans la douille de guidage (5).

3. Magasin selon la revendication 2, **caractérisé en ce que** la douille de guidage (5) et le mandrin de guidage (5a) sont conçus de sorte à pouvoir s'engager facilement et cependant à garantir une position définie de la tête du magasin (1) et du magasin amovible (2) l'un vers l'autre.

4. Magasin selon la revendication 1, **caractérisé en ce que** la fermeture du magasin (8) est exécutée de sorte à ce que les capuchons d'électrode (3) soient en stock dans le magasin amovible (2) et soient déplacés par le convoyeur de capuchons (9) chargé de préférence en force de ressort en direction de la tête du magasin (1), et retenus par le levier d'arrêt (8a) dans le magasin amovible (2).

5. Magasin selon la revendication 4, **caractérisé en ce que** le levier d'arrêt (8a) est chargé de force de ressort et l'ouverture de sortie du guidage de capuchon (11) est si réduite qu'une sortie des capuchons d'électrode est empêchée.

6. Magasin selon la revendication 1, **caractérisé en ce que** les guidages de capuchon (11) dans le magasin amovible (2) et dans la tête du magasin (11) soient adaptés dans leur coupe à la forme des capuchons d'électrode utilisés (3) de sorte à ce que les capuchons d'électrode puissent être convoyés avec une force faible et qu'un coinçage des capuchons (2) soit évitée dans les guidages de capuchon (11) et notamment sur la zone de jonction entre le magasin amovible (2) et la tête du magasin (1).

7. Magasin selon la revendication 1, **caractérisé en ce que** pour la surveillance du niveau de remplissage du magasin amovible (2) au moins un capteur est disposé.
